Europäisches Patentamt

European Patent Office

Office européen des brevets

(19)

(11) **EP 1 333 680 A2**

(12) **DEMANDE DE BREVET EUROPEEN**

(43) Date de publication:
06.08.2003 Bulletin 2003/32

(51) Int Cl.$^7$: **H04N 7/30**, G06T 9/00

(21) Numéro de dépôt: 03075049.1

(22) Date de dépôt: 08.01.2003

(84) Etats contractants désignés:
**AT BE BG CH CY CZ DE DK EE ES FI FR GB GR HU IE IT LI LU MC NL PT SE SI SK TR**
Etats d'extension désignés:
**AL LT LV MK RO**

(30) Priorité: 16.01.2002 FR 0200487
29.03.2002 FR 0204014

(71) Demandeur: **Koninklijke Philips Electronics N.V.**
**5621 BA Eindhoven (NL)**

(72) Inventeur: **Jung, Joel, c/o Société Civile S.P.I.D.**
**75008 Paris (FR)**

(74) Mandataire: **Chaffraix, Jean**
**Société Civile S.P.I.D.**
**156, Boulevard Haussmann**
**75008 Paris (FR)**

(54) **Procédé de traitement d'une image numérique**

(57) La présente invention concerne un procédé de traitement d'une image numérique (Im) comprenant des pixels, ladite image numérique étant encodée et décodée selon une technique de codage par blocs de pixels. Ledit procédé comporte une étape de classification (6) destinée à affecter une classe $(Cl_i)$ à un bloc $(B_j)$ de pixels de ladite image numérique, une étape d'évaluation de dégradation (5) de ladite image numérique délivrant une mesure de dégradation (DM) de ladite image numérique, une étape de sélection (9) de filtre destinée à associer un filtre $(F_l)$ à une paire de blocs adjacents $(B_j, B_k)$ selon leurs classes respectives $(Cl_m, Cl_n)$ et la mesure de dégradation (DM) de ladite image numérique, une étape de décision de filtrage (8) destinée à délivrer une décision de filtrage (Dec) pour une paire de blocs adjacents $(B_j, B_k)$ en fonction de la mesure de dégradation (DM) et une étape de filtrage (11) destinée à filtrer une paire de blocs adjacents $(B_j, B_k)$ à l'aide de son filtre associé $(F_l)$ délivrant une image numérique filtrée (ImF). L'avantage d'un tel procédé est d'être à la fois peu complexe et très efficace.

FIG. 2

**Description**

**Domaine technique de l'invention**

La présente invention concerne un procédé de traitement d'une image numérique comprenant des pixels, ladite image numérique étant encodée et décodée selon une technique de codage par blocs de pixels, ledit procédé comportant une étape de classification délivrant des classes, une étape d'évaluation de dégradation de ladite image numérique délivrant une mesure de dégradation de ladite image numérique et une étape de filtrage délivrant une image numérique filtrée.

Elle concerne également un dispositif de traitement d'une image numérique mettant en oeuvre un tel procédé.

Elle concerne également un programme d'ordinateur utilisant un tel procédé.

Elle concerne enfin un signal transportant un tel programme d'ordinateur.

Elle trouve notamment son application dans les décodeurs vidéo fonctionnant à bas débit et en temps réel, embarqués dans des appareils portables, comme les téléphones mobiles.

**Etat de la technique antérieure**

Face au besoin croissant de transmettre et de stocker des données numériques, les techniques de compression ou autrement dit de codage de données se sont généralisées. Les techniques les plus classiques de compression de données vidéo (les données vidéo sont aussi appelées par la suite séquences d'images numériques), telles que celles des standards MPEG (de l'anglais « Motion Picture Expert Group »), utilisent une transformation par blocs, par exemple la transformée en cosinus discrète (en anglais'Discrète Cosinus Transform' ou DCT). Une telle transformation par blocs présente l'avantage d'offrir de forts taux de compression. En revanche, l'étape de quantification qui lui fait suite crée des effets de blocs sur les images numériques décodées, qui conduisent à une dégradation de leur qualité. La quantification est en effet d'autant plus grossière que le débit d'encodage est plus faible. Par conséquent, la dégradation due à l'étape de quantification peut aller d'un niveau imperceptible lorsque le débit d'encodage est élevé, à un niveau très gênant lorsqu'il est faible.

Pour remédier à ce problème, de nombreuses techniques de traitement desdites images numériques décodées ont été développées au cours des dernières années, afin de corriger lesdits effets de blocs. Ces techniques concernent pour la plupart des séquences d'images numériques encodées et décodées selon la technique MPEG-2 pour des applications à haut débit, par exemple de diffusion de programmes de télévision par satellite.

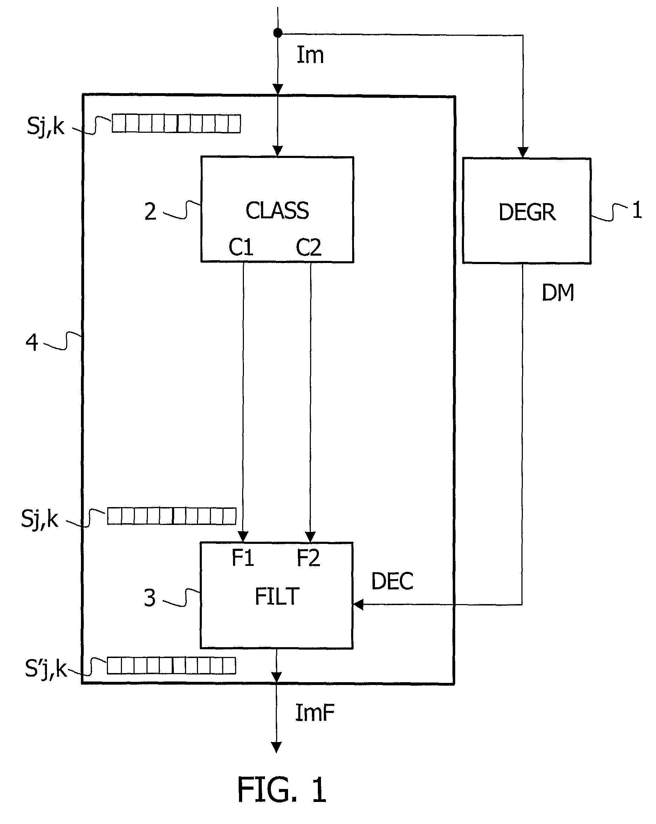

Avec l'essor d'Internet et d'appareils portables, par exemple de téléphones mobiles ou d'assistants personnels, est apparue la nécessité de transmettre des données vidéo sur des réseaux mobiles pour des applications à bas débits et en temps réel. Des techniques de compression plus adaptées ont été mises en oeuvre en conséquence, comme par exemple les standards MPEG-4 ou H.26L, elles aussi basées sur une transformation par blocs. En parallèle se sont développées des techniques de correction des effets de blocs plus spécifiquement dédiées aux bas débits. La technique de traitement d'une image numérique décodée mise en oeuvre dans le standard MPEG-4 est décrite dans le document de l'organisation internationale de normalisation ISO/IEC JTC 1/SC 29/WG 11, intitulé « *Technologie de l'information - Codage des objets audiovisuels - Partie 2 : visuel»,* N 3056, pages 454-56, publié le 31/01/2000. Elle vise à corriger les effets de blocs éventuellement présents dans des images numériques codées et décodées par la norme MPEG-4. Ladite technique de post traitement d'une image numérique décodée Im est décrite Fig. 1. Elle comporte les trois étapes suivantes :

- Une étape de d'évaluation de la dégradation DEGR (1) de l'image numérique Im, qui reçoit en entrée ladite image numérique Im et délivre une mesure de la dégradation DM de l'image,
- Une étape de classification CLASS (2), qui prend en entrée un segment $S_{j,k}$ de ligne ou de colonne de pixels de deux blocs adjacents $(B_j, B_k)$ de ladite image numérique Im, avec $0{\leq}j$, $k<nb_{max}$ ($nb_{max}$ étant le nombre de blocs présents dans l'image Im) et $j{\neq}k$, et lui attribue une classe $C_i$ parmi un ensemble de deux classes possibles. Les deux classes possibles sont la classe uniforme $C_1$ et la classe texturée $C_2$,
- Une étape de filtrage FILT (3), qui reçoit en entrée ledit segment de ligne ou de colonne de pixels $S_{j,k}$ de deux blocs adjacents et, en fonction de la mesure de dégradation DM, délivre ou non un segment filtré $S'_{j,k}$ à l'aide du filtre $F_1$ si ledit segment $S_{j,k}$ est de classe $Cl_1$ et à l'aide du filtre $F_2$ si ledit segment $S_{j,k}$ est de classe $C_2$.

Il faut noter que les étapes de classification CLASS (2) et FILT (3) s'appliquent à des segments de lignes ou de colonnes de pixels de deux blocs adjacents et que par conséquent lesdites étapes sont mises en oeuvre à l'intérieur d'une boucle (4) de balayage des segments de lignes et de colonnes de l'image numérique Im. Une fois le balayage effectué, on obtient une image numérique filtrée ImF.

EP 1 333 680 A2

Un inconvénient majeur de ce procédé réside dans sa complexité, qui, bien que du même ordre que d'autres techniques concurrentes, reste prohibitive pour des applications en temps réel et à bas débits dédiées par exemple aux terminaux mobiles.

**Exposé de l'invention**

La présente invention a pour but de proposer un procédé de traitement d'une image numérique comprenant des pixels, qui soit moins complexe pour une efficacité comparable.

Ce but est atteint par le procédé tel que décrit dans le paragraphe introductif et caractérisé en ce qu'il comprend:

- ladite étape de classification destinée à affecter une classe à un bloc de pixels de l'image numérique,
- une étape de sélection de filtre destinée à associer un filtre à une paire de blocs adjacents selon leurs classes respectives et la mesure de dégradation de l'image numérique,
- une étape de décision de filtrage destinée à délivrer une décision de filtrage pour une paire de blocs adjacents en fonction de la mesure de dégradation,
- ladite étape de filtrage destinée à filtrer une paire de blocs adjacents à l'aide de son filtre associé.

Un tel procédé permet en premier lieu de réduire la complexité. Pour ce faire, ladite étape de classification s'applique à des blocs entiers au lieu de segments de lignes ou de colonnes de pixels de deux blocs adjacents, ce qui permet de réduire le nombre d'opérations de classification à effectuer sur la totalité de l'image numérique décodée.

L'étape de sélection de filtre s'applique non plus à des segments de lignes ou de colonnes de pixels de deux blocs adjacents, mais à des paires de blocs adjacents, ce qui permet aussi de réduire le nombre d'opérations de sélection de filtre à effectuer.

De la même façon l'étape de décision de filtrage filtre s'applique non plus à des segments de lignes ou de colonnes de pixels de deux blocs adjacents, mais à des paires de blocs adjacents, d'où une réduction de la complexité.

Quant au filtrage proprement dit, le choix se fait parmi au moins deux filtres, selon des modèles prédéfinis associant un filtre à une paire de classes.

Selon un mode de réalisation particulièrement avantageux de l'invention, l'étape de classification est remarquable en ce qu'elle comporte au moins 4 classes, qui sont une classe homogène, une classe de lignes, une classe de colonnes et une classe texturée.

Ladite étape de classification comporte donc au moins deux classes supplémentaires par rapport à l'art antérieur, qui sont la classe de lignes et la classe de colonnes. Lignes et colonnes sont en effet des motifs de blocs qui apparaissent fréquemment sur les images numériques codées et décodées à bas débit. Avec ces deux classes supplémentaires, ladite étape de classification est plus sélective, ce qui permet, comme on le verra plus tard, de simplifier considérablement l'étape de filtrage par rapport à celle de l'état de l'art, tout en restant globalement aussi efficace.

Selon le mode de réalisation précédent, le procédé de traitement d'une image numérique est en outre remarquable en ce qu'il comporte au moins quatre filtres différents.

Le fait d'utiliser au moins quatre filtres linéaires très simples permet de compenser le fait que lesdits filtres ne soient pas adaptatifs, comme c'est le cas dans l'art antérieur. La qualité visuelle de l'image numérique filtrée est ainsi comparable à celle obtenue par l'art antérieur, mais à moindre coût de calcul.

Selon le mode de réalisation précédent, ladite étape de décision de filtrage d'une paire de blocs est remarquable en ce qu'elle est destinée à inhiber ou activer ladite étape de sélection de filtre par paire de blocs adjacents. En d'autres termes, la décision de filtrer ou non une paire de blocs adjacents ne se prend pas au niveau de l'étape de filtrage, comme c'est le cas dans l'art antérieur, mais au niveau de l'étape de sélection de filtre. Un avantage de ce mode de réalisation préféré de l'invention est de ne pas traiter un grand nombre de paires de blocs adjacents et donc de réduire de façon non négligeable le nombre d'opérations de sélection puis de filtrage à effectuer.

Selon le mode de réalisation précédent, ladite étape d'évaluation de la dégradation de l'image numérique (Im) est remarquable en ce qu'elle est destinée à fournir une mesure de dégradation (DM) en fonction de valeurs de pas de quantification de l'image courante (Im) et d'une image précédente. L'avantage d'utiliser au moins deux pas de quantification est de pouvoir calculer une variation du pas de quantification d'une image à l'autre et de pouvoir en déduire une mesure de dégradation (DM) plus précise que le simple pas de quantification. Ladite mesure peut éventuellement prendre en compte des données de connaissance a priori sur la norme de codage utilisée.

La présente invention a également pour objet un dispositif de traitement d'une image numérique permettant de mettre en oeuvre ledit procédé, dans un circuit intégré par exemple, à l'aide de moyens matériels (en anglais « hardware ») ou logiciels (en anglais « software »).

3

**Brève description des dessins**

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés parmi lesquels :

- la Fig. 1 est un schéma bloc du procédé de traitement d'une image numérique selon l'état de l'art,
- la Fig. 2 est un schéma bloc du procédé de traitement d'une image numérique selon l'invention,
- la Fig. 3 présente des courbes d'évolution du pas de quantification et de la mesure de dégradation selon l'invention tout au long d'une séquence d'images numériques codées et décodées selon une technique de codage par blocs,
- la Fig. 4 décrit un sous-bloc considéré à l'intérieur d'un bloc pour le choix d'une classe au sein de l'étape de classification,
- la Fig. 5 présente quatre filtres de lissage, qui peuvent être utilisés de façon avantageuse par le procédé de traitement d'une image numérique selon l'invention,
- la Fig. 6 présente des associations de paires de classes et d'un filtre en fonction d'une mesure de dégradation selon l'invention,
- la Fig. 7 est un schéma bloc du procédé de décodage incluant le procédé de traitement d'images numériques selon l'invention, et
- la Fig. 8 est un schéma bloc du procédé de codage incluant le procédé de traitement d'images numériques selon l'invention.

**Exposé détaillé d'au moins un mode de réalisation de l'invention**

L'invention concerne notamment un procédé de traitement d'une image numérique encodée et décodée selon une technique de codage par blocs, pour des applications à bas débit et en temps réel. La technique de codage mise en oeuvre est dans notre exemple la norme MPEG-4, mais peut être également la norme H.26L ou toute autre norme équivalente. Il faut noter que ce procédé pourrait aussi s'appliquer à une image fixe, encodée par exemple par la norme JPEG.
Une telle technique de codage par blocs décompose une image numérique en blocs. Dans le cas de la norme MPEG-4, lesdits blocs sont de taille constante égale à 8 pixels X 8 pixels. Lors de l'encodage, lesdits blocs sont ensuite soumis à une transformation fréquentielle. Dans le cas de MPEG-4 et de la plupart des techniques standards, il s'agit de la transformation en cosinus discrète DCT (de l'anglais « Discrete Cosinus Transform »). Lors du décodage, des effets de blocs peuvent apparaître aux frontières de blocs.

Un effet de bloc ressemble à un bord, mais il n'a aucune existence réelle dans le contenu de l'image proprement dit. L'objectif de l'invention est notamment d'éliminer des faux bords situés aux frontières de blocs de façon aussi efficace mais beaucoup moins complexe que des méthodes classiques.

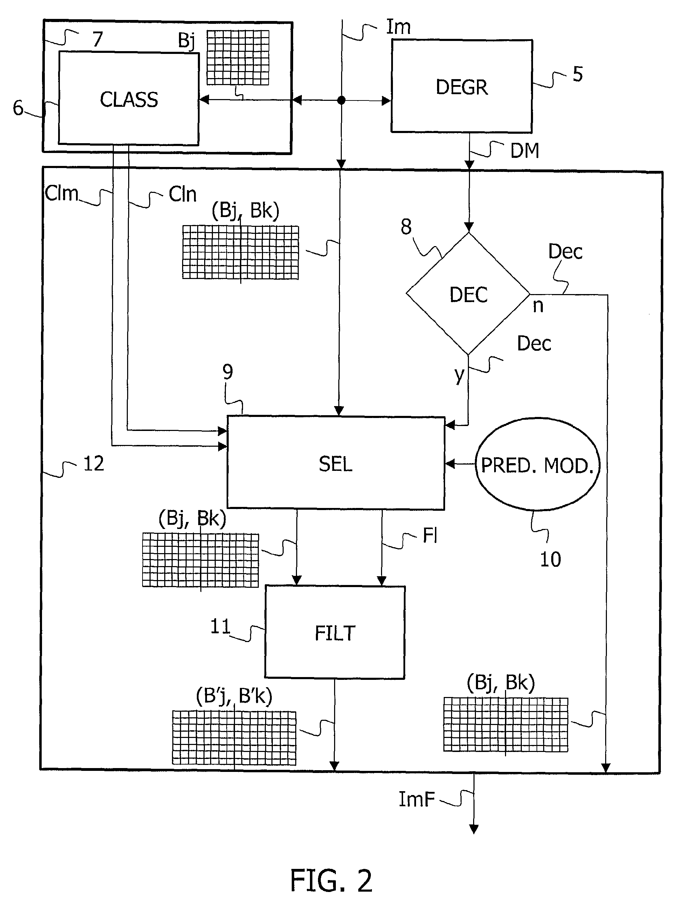

Sur la Fig. 2 on a représenté un schéma bloc résumant le fonctionnement d'un procédé de traitement d'une image numérique selon l'invention. Une image numérique décodée Im est d'abord présentée en entrée d'une étape d'évaluation de dégradation DEGR (5), qui délivre une mesure de dégradation DM de l'image numérique Im.

Une étape de décision de filtrage DEC (8) selon ladite mesure de dégradation DM lui fait suite. Ladite étape de décision de filtrage décide, pour une paire de blocs adjacents $(B_j, B_k)$ avec $0 \leq j$, $k < nb_{max}$, $nb_{max}$ étant le nombre total de blocs présents dans l'image Im, $j \neq k$ et une mesure de dégradation DM, si une étape de filtrage est nécessaire ou non. Ladite décision Dec est prise indépendamment des autres étapes du procédé qui vont être décrites ci-dessous, et à ce titre peut donc s'appliquer à différents stades du procédé. Ce peut être par exemple en dernier lieu, c'est-à-dire au niveau de ladite étape de filtrage, comme dans l'état de l'art, mais ce n'est pas limitatif. Comme nous le verrons plus tard, il est même plus intéressant d'appliquer cette décision le plus en amont possible, de façon à éliminer le maximum de cas à traiter.

Parallèlement aux étapes d'évaluation de la dégradation DEGR (5) et de décision de filtrage en fonction de la dégradation DEC (8) précédemment décrites, ladite image Im est présentée bloc par bloc à une étape de classification CLASS (6). Ladite étape de classification CLASS(6) associe à un bloc $B_j$, $0 \leq j < nb_{max}$, une classe $Cl_i$, $i \geq 0$, choisie parmi un ensemble de classes prédéfinies. Il faut noter que ladite étape de classification CLASS (6) est mise en oeuvre au sein d'une boucle (7) de balayage des blocs $B_j$, $0 \leq j < nb_{max}$, présents dans l'image numérique d'entrée Im.

A partir de ce stade, on ne considère plus des blocs isolés, mais des paires de blocs adjacents horizontalement et verticalement. Une paire de blocs adjacents $(B_j, B_k)$ avec $0 \leq j$, $k < nb_{max}$ et $j \neq k$, associée à une paire de classes $(Cl_m, Cl_n)$, avec $m \geq 0$ et $n \geq 0$ et à une mesure de dégradation DM, est alors traitée par une étape de sélection de filtre SEL (9). Ladite étape de sélection de filtres SEL (9) délivre un filtre $F_l$, $l \geq 0$, à appliquer à ladite paire de blocs adjacents $(B_j, B_k)$ avec $0 \leq j$, $k < nb_{max}$ et $j \neq k$. Le choix du filtre $F_l$ se fait en fonction de la paire de classes $(Cl_m, Cl_n)$ associée à la paire de blocs adjacents $(B_j, B_k)$ et de la mesure de dégradation DM de l'image numérique d'entrée Im, à partir de modèles prédéfinis 10 associant des paires de classes à des filtres.

Ladite paire de blocs adjacents ($B_j$, $B_k$) avec $0{\leq}j$, $k{<}nb_{max}$ et $j{\neq}k$ et son filtre associé Fl sont ensuite présentés en entrée d'une étape de filtrage FILT (11), qui délivre une paire de blocs adjacents filtrés ($B'_j$, $B'_k$) avec $0{\leq}j$, $k{<}nb_{max}$ et $j{\neq}k$.

Les étapes de sélection de filtre SEL (9) et de filtrage FILT(11) proprement dites sont effectuées de préférence pour toutes les paires de blocs adjacents horizontalement et verticalement présentes dans l'image numérique d'entrée Im. Elles sont donc mises en oeuvre au sein d'une boucle (12) de balayage de l'image numérique d'entrée Im. Le procédé selon l'invention délivre, pour une image numérique décodée Im, une image numérique décodée filtrée ImF.

Considérons maintenant plus en détail les différentes étapes du procédé selon l'invention :

L'étape d'évaluation de la dégradation DEGR (5) reçoit en entrée une image numérique Im et délivre une mesure de dégradation de ladite image numérique Im. Cette évaluation de la dégradation s'appuie sur le pas de quantification QP utilisé lors de l'encodage.

Dans le mode de réalisation préféré de l'invention, la mesure ne correspond pas directement à la valeur dudit pas de quantification QP, mais plutôt à une valeur modifiée de QP en fonction de caractéristiques connues de la technique de compression de données vidéo utilisée. Par exemple, dans le cas de MPEG-4, il est connu que la toute première image de la séquence (en d'autres termes la première image Intra, codée indépendamment des autres images de la séquence) est toujours quantifiée de façon trop grossière. Elle est donc de relativement mauvaise qualité. En conséquence, un certain nombre d'images qui lui succèdent et dépendent d'elle pour leur encodage (ce sont des images prédites, appelées images P) sont de qualité moindre que ce que pourrait indiquer le pas de quantification qui leur est associé.

Dans le procédé selon l'invention, la mesure de dégradation DM(Im) est en quelque sorte un pas de quantification virtuel. Il est évalué en fonction du pas de quantification QP de l'image Im, de la façon suivante :

- Si le pas de quantification $QP_{prec}$ de l'image précédente est égal à la valeur maximale prévue par la norme (pour MPEG-4, il s'agit de 31), alors la mesure de dégradation DM est fixée à 30. En effet, si $QP_{prec}$= 31, on sait que l'image courante est la première de la séquence. Pour les raisons précédemment évoquées, on lui affecte d'office une mesure de dégradation DM très élevée.
- Sinon, si le pas de quantification $QP_{prec}$ de l'image précédente est inférieur au pas de quantification QP de l'image courante, alors la dégradation DM est fixée à la valeur de QP. Si le pas de quantification a augmenté, on répercute donc immédiatement cette hausse au niveau de la mesure de dégradation DM.
- Sinon, on évalue la variation du pas de quantification :
  $variation_{QP}=QP_{prec}-QP$ et on calcule la mesure de dégradation DM comme suit : DM = $QP_{prec}$ - $variation_{QP}$/ 4. Si le pas de quantification a diminué, on fait suivre la même tendance à la mesure de dégradation, mais de manière plus douce.

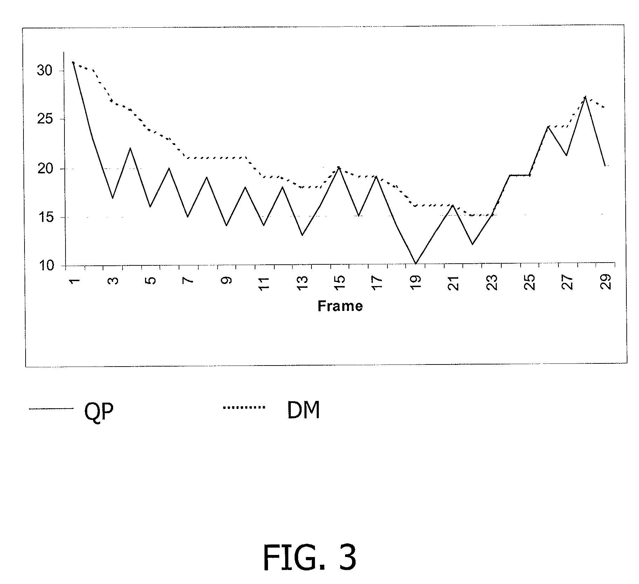

Un exemple d'évolution de la mesure de dégradation DM sur une séquence d'images par rapport à l'évolution du pas de quantification QP est présenté Fig. 3.

L'étape de décision de filtrage DEC (8) selon la mesure de dégradation DM calculée pour l'image courante Im s'applique de préférence à toutes les paires de blocs adjacents possibles de l'image Im. Pour une paire de blocs adjacents ($B_j$, $B_k$), le bord éventuellement à corriger se situe à la frontière entre les blocs $B_j$ et $B_k$. Le but de ladite étape de décision de filtrage DEC(8) est d'estimer qu'il agit d'un vrai bord et dans ce premier cas décider de ne pas le filtrer, ou d'estimer qu'il ne s'agit pas d'un vrai bord et dans ce second cas décider de le filtrer pour le faire disparaître. Pour ce faire, on considère la différence d'intensité maximale Diff qui existe entre les blocs $B_j$ et $B_k$ de la paire à partir des valeurs d'intensités maximales et minimales des deux blocs en question et on la compare à la mesure de dégradation DM pondérée.

Plus précisément, la décision de filtrer Dec est prise selon le critère suivant :

- Si la différence d'intensité maximale Diff entre les blocs $B_j$ et $B_k$ est inférieure à 1.5 fois la mesure de dégradation, alors la décision de filtrage est positive. Dans ce cas, on considère donc que l'on n'a pas affaire à un véritable bord,
- Sinon elle est négative. Cette fois, la différence d'intensité Diff est jugée suffisamment importante pour qu'il s'agisse d'un véritable bord.

Comme nous l'avons déjà évoqué, cette décision Dec peut être prise en compte à différents niveaux du procédé selon l'invention. En revanche, plus ladite décision Dec est prise tôt, plus le nombre de paires de classes à traiter au cours des étapes suivantes est réduit. Dans un mode de réalisation préféré de l'invention, l'étape de décision de filtrage DEC(8) d'une paire de blocs inhibe ou active ladite étape de sélection de filtre SEL(9) par paire de blocs adjacents. En d'autres termes, la décision de filtrer ou non une paire de blocs adjacents ($B_j$, $B_k$)selon la mesure de dégradation DM de l'image courante Im à laquelle la paire $(B_j, B_k)$ appartient, est exploitée très tôt au cours du procédé de post traitement d'images numériques selon l'invention. En éliminant des l'entrée de l'étape de sélection les paires de blocs adjacents qui de toutes façons ne seront pas filtrées, on réduit au maximum le nombre de cas à traiter et donc la complexité dudit procédé.

Si on considère de nouveau la Fig. 2, on distingue deux branches de traitement parallèles d'une image Im donnée :

- la première branche vient d'être décrite et comporte l'étape de mesure de dégradation DEGR (5) et l'étape de décision de filtrage DEC (8) qui lui fait suite,
- la seconde branche comporte l'étape de classification CLASS (6), l'étape de sélection de filtre SEL (9) et l'étape de filtrage proprement dite FILT (11).

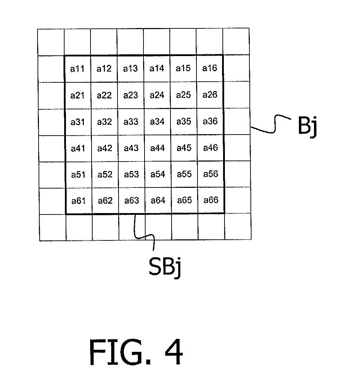

Comme nous l'avons déjà évoqué, l'étape de classification CLASS (6) traite des blocs entiers et non pas des segments de pixels. Elle s'applique à tous les blocs $B_j$ de taille P pixels x Q pixels (dans MPEG-4, les blocs considérés sont de taille 8x8), avec $0 \leq j < nb_{max}$, d'une image numérique décodée Im. A l'intérieur dudit bloc $B_j$, on considère tous les pixels, sauf les pixels du bord. Un exemple de bloc 8x8 est donné Fig. 4. Le sous-bloc $SB_j$ considéré est donc formé d'un tableau de coefficients $\{a_{p,q}\}$, avec p=1...P-2 et q=1...Q-2. Ladite étape de classification CLASS (6) consiste à évaluer certains types de discontinuités d'intensité à l'intérieur de ce sous-bloc et à les comparer à des seuils, le but final étant d'affecter une classe $Cl_i$, $i \geq 0$ à chaque bloc $B_j$.

Le choix se fait parmi au moins deux classes, qui sont, comme dans l'art antérieur, une classe homogène et une classe texturée. Dans un mode de réalisation préféré de l'invention, quatre classes sont utilisées, c'est-à-dire que la classe homogène $Cl_1$ et la classe texturée $Cl_4$ sont complétées par une classe de lignes $Cl_2$ et une classe de colonnes $Cl_3$.

En conséquence l'étape de classification CLASS 6) évalue pour un sous-bloc $SB_j$ d'un bloc $B_j$, les discontinuités suivantes :

- Le bloc $B_j$ est dit membre de la classe homogène $Cl_1$ s'il satisfait les conditions suivantes :

$$|m_1 - m_2| < S, \text{ avec :}$$

$$m_1 = \max\{a_{p,q}\}_{p=1..P-2, q=1...Q-2} \text{ et } m_2 = \min\{a_{p,q}\}_{p=1..P-2, q=1...Q-2}.$$

m1 est le maximum des coefficients $a_{pq}$ du sous-bloc $SB_j$, m2 est le minimum des coefficients $a_{p,q}$ du sous-bloc $SB_j$.

- Le bloc $B_j$ est dit membre de la classe de lignes $Cl_2$ si, pour toute ligne p, p = 1...P-2, du sous-bloc $SB_j$:

$$|m_1 - m_2| < S, \text{ avec :}$$

$$m_1 = \max\{a_{p,q}\}_{q=1...Q-2} \text{ et } m_2 = \min\{a_{p,q}\}_{q=1...Q-2}.$$

m1 est le maximum des coefficients $a_{p,q}$ de la ligne p sous-bloc $SB_j$, m2 est le minimum des coefficients $a_{p,q}$ de la ligne p du sous-bloc $SB_j$.

- Le bloc $B_j$ est dit membre de la classe de colonnes $Cl_3$ si, pour toute colonne q, q=1...Q-2, du sous-bloc $SB_j$:

$$|m_1 - m_2| < S, \text{ avec :}$$

$$m_1 = \max\{a_{p,q}\}_{p=1...P-2} \text{ et } m_2 = \min\{a_{p,q}\}_{p=1...P-2}.$$

m1 est le maximum des coefficients $a_{p,q}$ de la colonne q sous-bloc $SB_j$, m2 est le minimum des coefficients $a_{p,q}$

de la colonne q du sous-bloc $SB_j$.

- Si aucune des conditions précédentes n'est satisfaite, le bloc $B_j$ est dit membre de la classe texturée $Cl_4$.

Ledit seuil S est par exemple fixé à 3 unités d'intensité, selon des considérations liées au système visuel humain pour un bloc 8x8.

L'étape de sélection de filtre SEL (9) par paire de blocs adjacents compare les classes des blocs de ladite paire de blocs adjacents à des modèles prédéfinis associant des paires de classes et des filtres. Une paire de blocs adjacents $(B_j, B_k)$ et la paire de classes $(Cl_m, Cl_n)$ qui lui a été associée par l'étape précédente de classification CLASS (6) sont présentées en entrée de ladite étape de sélection de filtre SEL(9), ainsi que la mesure de dégradation DM associée à l'image courante Im comprenant la paire de blocs $(B_j, B_k)$. Lesdits modèles prédéfinis ont été eux aussi construits à partir de considérations sur les propriétés du système visuel humain, bien connues de l'homme de métier. La propriété la plus importante dans le cas présent est appelée masquage de texture (de l'anglais « texture masking ») et se traduit par le fait que l'oeil est peu sensible aux défauts dans une zone très texturée de l'image. Dans ces zones-là il est donc d'inutile de filtrer. On risque en effet plus d'endommager les vrais contours d'objets éventuellement présents que de réduire les effets de blocs, ces derniers étant à peine visibles pour l'oeil humain. Au contraire, dans les zones homogènes, l'oeil humain est très sensible aux effets de bords et il est d'autant plus facile de filtrer que la zone est dépourvue de vrais contours à préserver.

Au cours de cette étape de sélection de filtre SEL(9), la mesure de dégradation DM de l'image Im permet de raffiner le choix du filtre à appliquer. En effet, si la mesure de dégradation est élevée, on pourra se permettre de filtrer plus fortement pour compenser la quantification grossière.

En conséquence, on voit qu'il est possible de définir a priori des modèles qui associent à une paire de classes et une mesure de dégradation un choix de filtre approprié. Par exemple, si la paire de blocs adjacents $(B_j, B_k)$ est associée à la paire de classes homogènes $(Cl_1, Cl_1)$, le filtre de lissage choisi est assez fort et d'autant plus fort que la mesure de dégradation est élevée. Pour une paire de classes de lignes $(Cl_2, Cl_2)$, un lissage horizontal assez fort est possible, car il se fait dans la direction des lignes. A l'opposé, pour une paire de classes de colonnes $(Cl_3, Cl_3)$, le filtre horizontal choisi est un filtre nul.

En conclusion, aucun calcul n'est effectué à ce niveau. L'étape de sélection de filtre consiste à consulter des tables préétablies, afin d'y sélectionner un filtre.

L'étape de filtrage FILT (11) filtre une paire de blocs adjacents $(B_j, B_k)$ à l'aide du filtre $F_l$ qui lui a été associé par l'étape précédente de sélection de filtre SEL(9). Les filtres utilisés sont très simples. Ce sont des filtres passe-bas, linéaires et qui s'appliquent soit dans la direction verticale soit dans la direction horizontale. Ils se distinguent entre eux par le nombre de pixels sur lequel ils agissent de part et d'autre de la frontière entre les deux blocs. Pour une paire de blocs 8x8 adjacents, le même filtre linéaire $F_l$ est donc appliqué pour chaque ligne de la paire s'il s'agit d'une paire horizontale, respectivement pour chaque colonne s'il s'agit d'une paire verticale, donc huit fois consécutives. Il faut noter que, dans le cas d'une implémentation du procédé à l'aide de moyens matériels (en anglais « hardware »), cette répétition d'actions identiques permet des optimisations très efficaces.

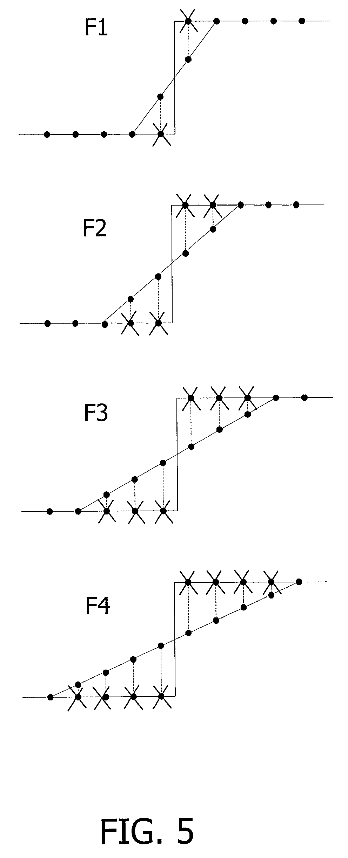

Dans un mode de réalisation préféré de l'invention, quatre filtres de lissage sont utilisés. Lesdits filtres sont décrits Fig. 5. Ils constituent un bon compromis entre simplicité et efficacité, mais on pourrait aussi avoir recours à des filtres plus complexes voire à un plus grand nombre de filtres.

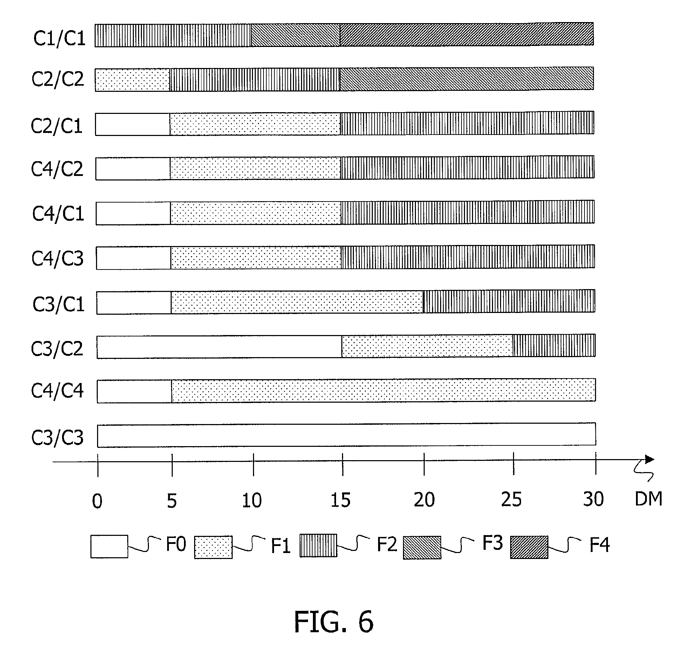

Dans ce même mode de réalisation préféré de l'invention, les modèles prédéfinis utilisés pour les quatre filtres de lissage présentés ci-dessus sont décrits Fig. 6.

Il faut noter que lesdits modèles prédéfinis présentés Fig. 6 ne sont qu'un exemple d'associations possibles.

Il faut noter que toutes les paires de blocs adjacents ne sont pas filtrées. Comme nous l'avons vu précédemment, la décision de filtrer ou non une paire de blocs adjacents $(B_j, B_k)$ est conditionnelle à la décision prise par l'étape de décision selon la mesure de dégradation DM de l'image courante Im.

Dans le mode de réalisation préféré de l'invention, l'étape de classification à partir de quatre classes est plus sélective que l'état de l'art, ce qui permet de compenser le fait que l'étape de filtrage soit beaucoup simplifiée. On constate en effet que les motifs de lignes et de colonnes sont assez couramment rencontrés dans des données vidéo codées et décodées à relativement bas débit. Le fait de les identifier dès l'étape de classification permet de les filtrer de façon plus adaptée, avec des filtres simples.

Le mode de réalisation préféré de l'invention conduit à des performances identiques à celles de l'art antérieur en termes de qualité visuelle, au prix d'une complexité quatre fois moindre. Une telle réduction de la complexité est principalement due au fait que la classification et le filtrage s'appliquent à des blocs ou à des paires de blocs entiers, non plus à des segments de blocs ou de paires de blocs et que les filtres utilisés sont très simples et non adaptatifs.

La présente invention peut être réalisée sous forme d'un logiciel (en anglais « software ») embarqué dans un ou plusieurs circuits mettant en oeuvre le procédé de post traitement d'images numériques précédemment décrit, ou bien sous la forme de circuits intégrés. Le dispositif de post traitement d'images numériques codées et décodées selon une technique de compression par blocs correspondant au dit procédé reprend ici les blocs fonctionnels de la Fig. 2. Il comprend:

- des moyens de classification destinés à affecter une classe ($Cl_i$) à un bloc ($B_j$) de pixels de ladite image numérique Im,
- des moyens de sélection de filtre (SEL) destinés à associer un filtre ($F_l$) à une paire de blocs adjacents ($B_j$, $B_k$) selon leurs classes respectives ($Cl_m$, $Cl_n$) et la mesure de dégradation (DM) de ladite image numérique (Im),
- des moyens de décision de filtrage destinés à délivrer une décision de filtrage par paire de blocs adjacents,
- des moyens de décision de filtrage (DEC) destinés à délivrer une décision de filtrage (Dec) pour une paire de blocs adjacents ($B_j$, $B_k$) en fonction de la mesure de dégradation (DM),
- des moyens de filtrage (FILT) destinés à filtrer une paire de blocs adjacents ($B_j$, $B_k$) à l'aide de son filtre associé ($F_l$).

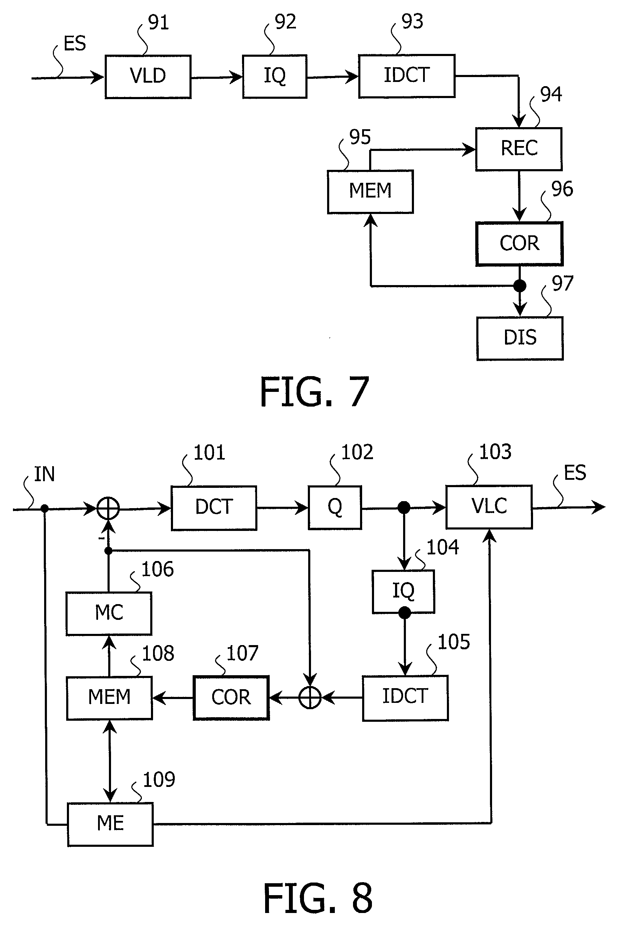

La Fig. 7 illustre le fonctionnement d'un décodeur vidéo apte à fournir des images numériques décodées et comprenant un dispositif de traitement mettant en oeuvre le procédé de traitement selon l'invention.

Le décodeur vidéo comprend :

- des moyens de décodage à longueur variable VLD (91) des données numériques codées ES, aptes à fournir des données quantifiées,
- des moyens de quantification inverse IQ (92) des données quantifiées, aptes à fournir des données transformées,
- un dispositif de transformation fréquentielle inverse, dans notre exemple une transformation en cosinus discrète inverse IDCT (93) de données transformées en données inversement transformées, tel que précédemment décrit.

Le dispositif de décompression comprend en outre une étape de reconstruction REC (94) de l'image bloc de données par bloc de données, grâce à une mémoire d'image MEM (95). Le dispositif de traitement COR (96) mettant en oeuvre le procédé de traitement selon l'invention, ledit dispositif étant apte à traiter les blocs de l'image numérique reconstruite de manière à fournir des images numériques traitées en vue de son affichage sur un écran DIS (97).

La Fig. 8 illustre le fonctionnement d'un codeur vidéo apte à recevoir des images numériques IN sous forme de blocs de données, et comprenant, dans la boucle de codage, des moyens de transformation fréquentielle inverse suivi d'un dispositif de traitement mettant en oeuvre le procédé de traitement selon l'invention.

Le codeur vidéo (100) comprend :

- un dispositif de transformation fréquentielle directe, ici une transformation en cosinus discrète directe DCT (101) de données numériques vidéo en données transformées, tel que précédemment décrit,
- des moyens de quantification Q (102) des données transformées, aptes à fournir des données quantifiées, et
- des moyens de codage à longueur variable VLC (103) des données quantifiées, aptes à fournir des données codées ES.

Il comprend également une unité de prédiction comprenant en séries :

- des moyens de quantification inverse IQ (104) des données quantifiées, aptes à fournir des données transformées,
- un dispositif de transformation en cosinus discrète inverse IDCT (105) de données transformées en données inversement transformées, tel que précédemment décrit,
- un additionneur des données issues du dispositif de transformation IDCT et d'un dispositif de compensation de mouvement MC (106),
- le dispositif de traitement COR (107) mettant en oeuvre le procédé de traitement selon l'invention et apte à traiter des blocs de données décodées issues de la sortie de l'additionneur de manière à fournir des blocs de données traitées à une mémoire d'image MEM (108),
- la mémoire d'images MEM (108), apte à stocker les images utilisées par le dispositif de compensation de mouvement MC (106), et les vecteurs de mouvements issus d'un dispositif d'estimation de mouvement ME (109), et
- un soustracteur, apte à soustraire les données issues du dispositif de compensation de mouvement des données vidéo numériques d'entrée IN, le résultat de ce soustracteur étant délivré au dispositif de transformation DCT.

Il est également envisageable d'insérer le dispositif de traitement COR (107) entre dispositif de transformation en cosinus discrète inverse IDCT (105) et l'additionneur, le traitement étant effectué sur un signal différentiel et non sur un signal reconstruit.

Le dispositif de traitement mettant en oeuvre le procédé de traitement selon l'invention peut ainsi améliorer les performances d'un codeur vidéo, notamment en termes de qualité de codage mais aussi en termes de débit de sortie. En outre, la mise en cascade du codeur vidéo de la Fig. 10 et du décodeur vidéo de la Fig. 9, permet d'obtenir une excellente qualité d'image, bien supérieure à celle obtenue avec un codeur vidéo standard cascadé avec le décodeur vidéo de la Fig. 9 ou à celle du codeur vidéo de la Fig. 10 cascadé avec un décodeur vidéo standard.

Il existe de nombreuses manières d'implémenter les fonctions précédemment citées au moyen de logiciels. A cet égard, la Fig. 2 est très schématique. Donc bien qu'elle montre plusieurs fonctions sous forme de blocs séparés, ceci n'exclut pas qu'un seul logiciel effectue plusieurs fonctions. Ceci n'exclut pas non plus qu'une seule fonction puisse être effectuée par un ensemble de logiciels. Il est possible d'implémenter ces fonctions au moyen d'un circuit de décodeur vidéo, d'un circuit de récepteur-décodeur de télévision numérique (en anglais « set-top-box »), ou d'un circuit récepteur de télévision, ledit circuit étant convenablement programmé. Un jeu d'instruction contenu dans une mémoire de programmation peut amener le circuit à effectuer les différentes opérations décrites précédemment en référence à la Fig. 2. Le jeu d'instructions peut aussi être chargé dans la mémoire de programmation par lecture d'un support de données, comme par exemple un disque qui contient le jeu d'instructions. La lecture peut également s'effectuer par l'intermédiaire d'un réseau de communications, comme par exemple le réseau Internet. Dans ce cas, un fournisseur de services mettra le jeu d'instructions à la disposition des intéressés.

Aucun signe de référence entre parenthèses dans le présent texte ne doit être pris de manière limitative. Le verbe « comprendre » et ses conjugaisons n'exclut pas la présence d'autres éléments ou étapes que ceux listés dans une phrase. Le mot « un » ou « une » précédant un élément n'exclut pas la présence d'une pluralité de ces éléments ou de ces étapes.

## Revendications

1.  Procédé de traitement d'une image numérique (Im) comprenant des pixels, ladite image numérique étant encodée et décodée selon une technique de codage par blocs de pixels, ledit procédé comportant une étape de classification (6) délivrant des classes ($Cl_i$), une étape d'évaluation de dégradation (5) de ladite image numérique délivrant une mesure de dégradation (DM) de ladite image numérique et une étape de filtrage (11) délivrant une image numérique filtrée (ImF), **caractérisé en ce qu'**il comprend :

    -   ladite étape de classification (6) destinée à affecter une classe à un bloc ($B_j$) de pixels de ladite image numérique (Im),
    -   une étape de sélection (9) de filtre, destinée à associer un filtre ($F_l$) à une paire de blocs adjacents ($B_j$, $B_k$) selon leurs classes respectives ($Cl_m$, $Cl_n$) et la mesure de dégradation (DM) de ladite image numérique (Im),
    -   une étape de décision de filtrage (8) destinée à délivrer une décision de filtrage (Dec) pour une paire de blocs adjacents ($B_j$, $B_k$) en fonction de la mesure de dégradation (DM),
    -   ladite étape de filtrage (11) destinée à filtrer une paire de blocs adjacents ($B_j$, $B_k$) à l'aide de son filtre associé ($F_l$).

2.  Procédé de traitement selon la revendication 1, **caractérisé en ce que** ladite étape de classification (6) est apte à distinguer au moins quatre classes distinctes ($Cl_i$), qui sont une classe homogène, une classe de lignes, une classe de colonnes et une classe texturée.

3.  Procédé de traitement selon la revendication 2, **caractérisé en ce que** ledit procédé utilise au moins quatre filtres ($F_l$) différents.

4.  Procédé de post traitement selon la revendication 1, **caractérisé en ce que** :

    -   ladite étape de décision de filtrage (8) d'une paire de blocs adjacents ($B_j$, $B_k$) en fonction de la mesure de dégradation (DM) est destinée à inhiber ou activer ladite étape de sélection de filtre (9) par paire de blocs adjacents.

5.  Procédé de traitement selon la revendication 1, **caractérisé en ce que** l'étape d'évaluation de dégradation (5) est destinée à fournir une mesure de dégradation (DM) en fonction de valeurs de pas de quantification de l'image courante (Im) et d'une image précédente.

6.  Dispositif de traitement d'une image numérique (Im) comprenant des pixels, ladite image numérique étant encodée et décodée selon une technique de codage par blocs de pixels, ledit procédé comportant des moyens de classification (6) délivrant des classes ($Cl_i$), des moyens d'évaluation de dégradation (5) de ladite image numérique (Im) délivrant une mesure de dégradation (DM) de ladite image numérique et des moyens de filtrage (11) délivrant une image numérique filtrée (ImF), **caractérisé en ce qu'**il comprend :

- lesdits moyens de classification (6) destinés à affecter une classe ($Cl_i$) à un bloc ($B_j$) de pixels de ladite image numérique (Im),
- des moyens de sélection de filtre (9) destinés à associer un filtre ($F_l$) à une paire de blocs adjacents ($B_j$, $B_k$) selon leurs classes respectives ($Cl_m$, $Cl_n$) et la mesure de dégradation (DM) de ladite image numérique (Im),
- des moyens de décision de filtrage (8) destinés à délivrer une décision de filtrage (Dec) pour une paire de blocs adjacents ($B_j$, $B_k$) en fonction de la mesure de dégradation (DM),
- lesdits moyens de filtrage (11) destinés à filtrer une paire de blocs adjacents ($B_j$, $B_k$) à l'aide de son filtre associé ($F_l$).

7. Dispositif de traitement selon la revendication 6, **caractérisé en ce que** lesdits moyens de classification (6) comportent au moins quatre classes ($Cl_i$), qui sont une classe homogène, une classe de lignes, une classe de colonnes et une classe texturée.

8. Dispositif de décodage d'une image numérique encodée selon une technique de codage par blocs de pixels, comportant un dispositif de traitement d'une image numérique selon les revendications 6 à 7 apte à traiter l'image numérique décodée (Im).

9. Dispositif de codage apte à recevoir des images numériques sous forme de blocs de pixels, et comprenant des moyens de transformation fréquentielle inverse suivis d'un dispositif de traitement mettant en oeuvre le procédé de traitement selon l'une des revendications 1 à 5, apte à traiter des blocs de pixels décodés issues des moyens de transformation fréquentielle inverse de manière à fournir des blocs de pixels traités.

10. Appareil portable comprenant un dispositif de décodage selon la revendication 8, afin d'afficher les images numériques traitées sur un écran dudit appareil.

11. Programme d'ordinateur pour dispositif de traitement d'une image numérique encodée et décodée selon une technique de codage par blocs, comprenant un jeu d'instructions, qui, lorsqu'elles sont chargées dans un circuit dudit dispositif de traitement, amène celui-ci à effectuer le procédé selon les revendications 1 à 5.

12. Signal destiné à transporter un programme d'ordinateur selon la revendication 11.

FIG. 1

FIG. 2

FIG. 3

|  |  |  |  |  |  |  |  |
|---|---|---|---|---|---|---|---|
|  | a11 | a12 | a13 | a14 | a15 | a16 |  |
|  | a21 | a22 | a23 | a24 | a25 | a26 |  |
|  | a31 | a32 | a33 | a34 | a35 | a36 |  |
|  | a41 | a42 | a43 | a44 | a45 | a46 |  |
|  | a51 | a52 | a53 | a54 | a55 | a56 |  |
|  | a61 | a62 | a63 | a64 | a65 | a66 |  |
|  |  |  |  |  |  |  |  |

Bj

SBj

FIG. 4

FIG. 5

FIG. 6

FIG. 7

FIG. 8